(19) **Europäisches Patentamt**

**European Patent Office**

**Office européen des brevets**

(11) **EP 1 077 368 B1**

(12) **EUROPÄISCHE PATENTSCHRIFT**

(45) Veröffentlichungstag und Bekanntmachung des Hinweises auf die Patenterteilung:
**20.11.2002 Patentblatt 2002/47**

(51) Int Cl.$^7$: **G01L 9/00**

(21) Anmeldenummer: **99115658.9**

(22) Anmeldetag: **07.08.1999**

(54) **Kapazitiver keramischer Drucksensor**

Capacitive ceramic pressure sensor

Capteur céramique capacitif de pression

(84) Benannte Vertragsstaaten:
**DE FR GB IT**

(43) Veröffentlichungstag der Anmeldung:
**21.02.2001 Patentblatt 2001/08**

(73) Patentinhaber: **Endress + Hauser GmbH + Co.KG.**
**79689 Maulburg (DE)**

(72) Erfinder:
• **Hegner, Frank, Dr.**
**79540 Lörrach (DE)**

• **Velten, Thomas, Dipl.-Phys.**
**79664 Wehr (DE)**

(74) Vertreter: **Andres, Angelika**
**Endress + Hauser (Deutschland) Holding GmbH,**
**PatServe**
**Colmarer Strasse 6**
**79576 Weil am Rhein (DE)**

(56) Entgegenhaltungen:
**EP-A- 0 419 219     US-A- 3 277 720**
**US-A- 4 829 826     US-A- 5 050 034**

## Beschreibung

Die Erfindung betrifft einen kapazitiven keramischen Drucksensor.

Derartige Drucksensoren werden vielfach in der Prozeßautomation eingesetzt, um den Druck von ganz unterschiedlichen Prozeßmedien zu messen, die als Flüssigkeiten, Gase oder Dämpfe vorliegen können.

Im wesentlichen bestehen derartige Drucksensoren aus einem keramischen Grundkörper und einer keramischen Membran. Am Grundkörper ist eine flache Ausnehmung vorgesehen, die auch als Membranbett bezeichnet wird und die von der Membran vollständig überdeckt wird.

Das Membranbett und die Membran begrenzen eine Messkammer, die vom eigentlichen Prozeßmedium getrennt ist und die in der Regel mit Luft oder mit einem Silikonöl als Druckübertragungsmedium gefüllt ist. Die Druckkammer muß gas- bzw. flüssigkeitsdicht sein, dies erfordert einen erheblichen Aufwand bei der Herstellung der Verbindung Membran Grundkörper.

Am Membranbett und der dem Membranbett zugewandten Unterseite der Membran sind jeweils Elektroden vorgesehen, die meist in Sputtertechnik, Aufdampfverfahren oder z.B. im Siebdruckverfahren, wie in der US-A 50 50 035 beschrieben, aufgebracht werden. Diese beiden Elektroden bilden zusammen den eigentlichen Meßkondensator, dessen Meßsignal ausgewertet wird.

Wirkt auf die Oberseite der Membran das Prozeßmedium mit einem Druck P und ist dieser Druck unterschiedlich zu dem in der Druckkammer herrschenden Referenzdruck PR, so verformt sich die Membran elastisch. Dies führt zur Änderung des Abstandes der beiden Elektroden und damit zu einer Kapazitätsänderung des Meßkondensators. Die Kapazität des Meßkondensators ist ein Maß für die Druckdifferenz. Sie wird als Meßsignal mit Hilfe einer Auswerteelektronik, an die beide Elektroden angeschlossen sind, erfaßt und ausgewertet.

Man unterscheidet zwischen Drucksensoren für den Relativdruck, den Absolutdruck und den Differenzdruck, je nachdem welcher Referenzdruck in der Druckkammer vorliegt. Meist spricht man einfach nur vom Druck, der gemessen wird und nicht von der Druckdifferenz, wie es eigentlich zutreffend wäre. Neben Drucksensoren sind auch sogenannte Differenzdrucksensoren bekannt, die die Differenz zweier Prozeßdrücke erfassen. Derartige Differenzdrucksensoren bestehen z.B. aus zwei solchen beschriebenen Drucksensoren mit dem Unterschied, daß sie einen gemeinsamen Grundkörper aufweisen. Die Meßkammern befinden sich an den gegenüberliegenden Seiten des Grundkörpers. Sie sind durch einen Verbindungskanal, der dem Druckausgleich dient, miteinander verbunden.

Bei einem weiteren Differenzdrucksensor sind in einem Grundkörper zwei Messkammern durch eine gemeinsame Membran voneinander getrennt.

In beiden Fällen ist jeweils die Druckdifferenz der an den beiden Seiten des Grundkörpers herrschenden Prozeßdrücke die interessierende Meßgröße.

Keramische Membranen sind relativ empfindlich auf mechanische Zugspannungen und relativ unempfindlich auf Druckspannungen. Bei einem rechteckigförmigen Membranbett treten bei größeren Drücken insbesondere im Bereich der Auflagekante am Grundkörper starke Spannungen auf, die unter Umständen zum Bruch der Membran und damit zur Unbrauchbarkeit des Drucksensors führen können. Hier ist eine extreme Überlastverträglichkeit nicht gegeben.

Aus der US-A 3277720 sowie aus der EP-A 419219 ist jeweils ein Membranbett bekannt, das jedoch nur eine Krümmungsform, entweder konvex oder konkav, aufweist.

Aus der EP-0291393 ist ein Differenzdrucksensor bekannt, bei dem zur Erhöhung der Überlastverträglichkeit das Membranbett eine spezielle Form aufweist. Die Schnittlinie des Membranbetts ist dabei einer Biegelinie der Membran nachgebildet. Im Überlastfall, d.h. einem Differenzdruck weit außerhalb des für den Sensor vorgesehenen Meßbereichs, kommt die Membran desjenigen Drucksensors, an dem der größere Prozeßdruck herrscht, gleichmäßig zur Anlage mit ihrem Membranbett. Dies bedeutet zwar im Überlastfall eine sehr wirksame Abstützung der Membran am Grundkörper und damit zu einer Begrenzung der maximalen Spannungsbelastung der Membran, aber gleichzeitig wird durch die Wirkung von Adhäsionskräften das Ablösen der Membran vom Membranbett nach dem Überlastfall erschwert. D.h. die Verformung der Membran wird beibehalten, auch wenn die Druckdifferenz wieder in den normalen Meßbereich zurückkehrt. Das Meßsignal des Drucksensors ist in diesem Fall unbrauchbar. Auch dieser Differenzdrucksensor ist deshalb nur bedingt überlastverträglich.

Daß es sich hier um einen Differenzdrucksensor handelt ist unerheblich, da das Problem "Überlastverträglichkeit" offensichtlich unabhängig von der Art des Sensors (Druck- bzw. Differenzdrucksensor) ist. Die nachfolgenden Ausführungen gelten für kapazitive Drucksensoren und kapazitive Differenzdrucksensoren entsprechend, so daß der Einfachheit halber nur noch kapazitive Drucksensoren behandelt werden.

Überlastfälle sind in der Prozeßtechnik nie auszuschließen. Tritt kurzfristig ein Überlastfall auf und löst sich die Membran anschließend erst verzögert vom Membranbett, so ist die Prozeßsicherheit aufgrund des fehlerhaften Meßsignals nicht mehr gegeben. Löst sich die Membran gar nicht mehr vom Membranbett, muß der Drucksensor in aufwendiger Weise ausgetauscht werden.

Der Abstand Membranbett-Unterseite Membran liegt im Mikrometer-Bereich. Dies bedeutet einen hohen Aufwand bei der Herstellung des Membranbetts, das in der Regel aus dem vollen keramischen Grundkörper geschliffen und poliert werden muß.

Da bei einem Membranbett in Form einer Biegelinie der Abstand Membranbett - Unterseite der Membran über einen relativ großen Bereich, vom Rand des Membranbetts her gesehen, relativ klein ist, ist eine hohe Genauigkeit beim Herstellungsprozeß des Drucksensors notwendig. D.h. Rauhigkeiten beim Schleifen des Membranbetts müssen vermieden werden. Ein derartiger Drucksensor ist auch sehr empfindlich auf Partikel, die sich im Membranbett ablagern können. Weiterhin müssen Welligkeiten auf der Membran-Unterseite so gut wie möglich vermieden werden.

Durch den geringen Abstand Membranbett- Unterseite Membran ist auch der Elektrodenabstand entsprechend gering. Aufgrund des geringen Abstandes kann es leicht zu einem elektrischen Kurzschluß zwischen den Elektroden kommen.

Aufgabe der Erfindung ist es deshalb, einen kapazitiven Drucksensor zu schaffen, der einerseits das Ablösen der Membran vom Membranbett nach einem Überlastfall begünstigt, gleichzeitig soll die Spannungsbelastung der Membran im gesamten Meßbereich gering gehalten werden und zudem soll die Herstellung des Membranbetts durch zumindest bereichsweise höhere Fertigungstoleranzen vereinfacht werden.

Gelöst wird diese Aufgabe durch einen kapazitiven keramischen Drucksensor, bestehend aus

- einem keramischen Grundkörper mit einem kreisförmigen Membranbett,
- einer mit dem Grundkörper verbundenen keramischen Membran, die das Membranbett überdeckt,
- einem Meßkondensator zur Erzeugung eines Meßsignals mit einer ersten und zweiten Elektrode, die jeweils einander gegenüberliegend an dem Membranbett bzw. an der Unterseite der Membran aufgebracht sind, wobei das Membranbett aus einer konkaven Zentralfläche, an die sich eine konvexe Randfläche anschließt, besteht und die Schnittlinie des Membranbetts im Bereich der konvexen Randfläche stärker als im Bereich der konkaven Zentralfläche gekrümmt ist und der Wechsel zwischen konkaver und konvexer Krümmung der Schnittlinie innerhalb einer Randzone, die sich über ein Drittel des Membranbettradius erstreckt, erfolgt.

Nach einer bevorzugten Ausgestaltung der Erfindung verläuft die Schnittlinie im Bereich der konvexen Randfläche teilweise oberhalb und im Bereich der konkaven Zentralfläche vollständig unterhalb einer Membranbiegelinie mit gleicher maximaler Tiefe $T_{max}$ , die folgende mathematische Form besitzt: $T(r,p) \sim p(R^2{-}r^2)^2$. $T(r,p)$ gibt die Membranbetttiefe in Abhängigkeit vom Ort r und dem Druck p an. Der Radius des Membranbetts ist mit R bezeichnet

Nach einer weiteren bevorzugten Ausgestaltung der Erfindung hat die Schnittlinie folgende mathematische Form

$$T(r) \sim \left(R^{\alpha}-r^{\alpha}\right)^{\beta} * \frac{\left(\cos\left(0.5*\pi*\frac{r}{R}\right)\right)^{\gamma}}{\left(r^{\varepsilon}+R^{\varepsilon}\right)^{\varphi}} ,$$

mit den Parameterbereichen
$0< \alpha < 100$ und $\alpha$ gerade, $0< \beta <10$, $-5< \gamma < 10$, $0< \varepsilon < 100$, $-20< \varphi <20$

Nach einer weiteren bevorzugten Ausgestaltung der Erfindung weisen die Parameter folgende spezielle Werte auf:
$\alpha= 4$, $\beta= 1.1$, $\gamma= 0.6$, $\varepsilon= 8$, $\varphi= 4$

Nach einer weiteren bevorzugten Ausgestaltung der Erfindung, weist der Grundkörper 20 am äußeren Randbereich der Auflagefläche 130 eine Ausnehmung 134 auf, die zur Aufnahme des Aktivhartlots dient.

Nachfolgend ist die Erfindung anhand eines in der Zeichnung dargestellten Ausführungsbeispiels näher beschrieben. Es zeigen:

Fig. 1     schematische Aufsicht eines erfindungsgemäßen kapazitiven Drucksensors,
Fig. 2     Schnitt eines Drucksensors entlang der Linie A-B gemäß Fig. 1,
Fig. 3     funktionaler Verlauf einer Membranbettschnittlinie nach Fig. 2

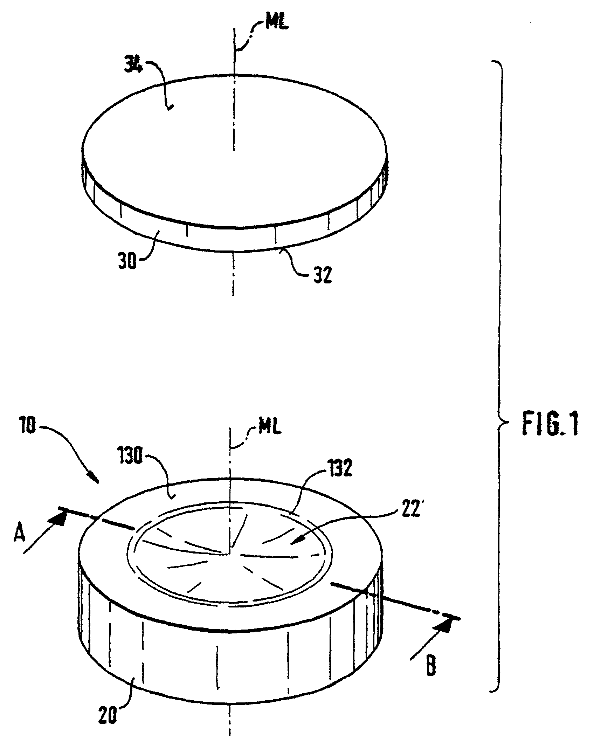

In Fig. 1 ist ein kapazitiver Drucksensor 10 in Aufsicht dargestellt, der im wesentlichen aus einem zylinderförmigen Grundkörper 20 und einer abgehoben dargestellten kreisförmigen Membran 30 besteht. Die Membran 30, die ein am Grundkörper vorgesehenes Membranbett 22 überdeckt, ist mit dem Grundkörper 20 verbunden. Die Verbindung zwischen der Unterseite 32 der Membran 30 und dem Grundkörper 20 erfolgt entlang einer Auflagefläche 130 der Membran 30.

Grundkörper 20 und Membran 30 bestehen aus einem keramischen Material, z.B. Aluminiumoxid. Als gas- und flüssigkeitsdichte Verbindung ist z.B. eine Aktivhartlotverbindung denkbar, die unter Vakuum bei ca. 900 C hergestellt wird. Im verbundenen Zustand begrenzen die Membran 30 und der Grundkörper 20 eine Druckkammer 40, die entweder mit Luft oder mit einer nahezu inkompressiblen Flüssigkeit z.B. einem Silikonöl gefüllt ist. In der Druckkammer 40 herrscht im unbelasteten Zustand der Referenzdruck PR.

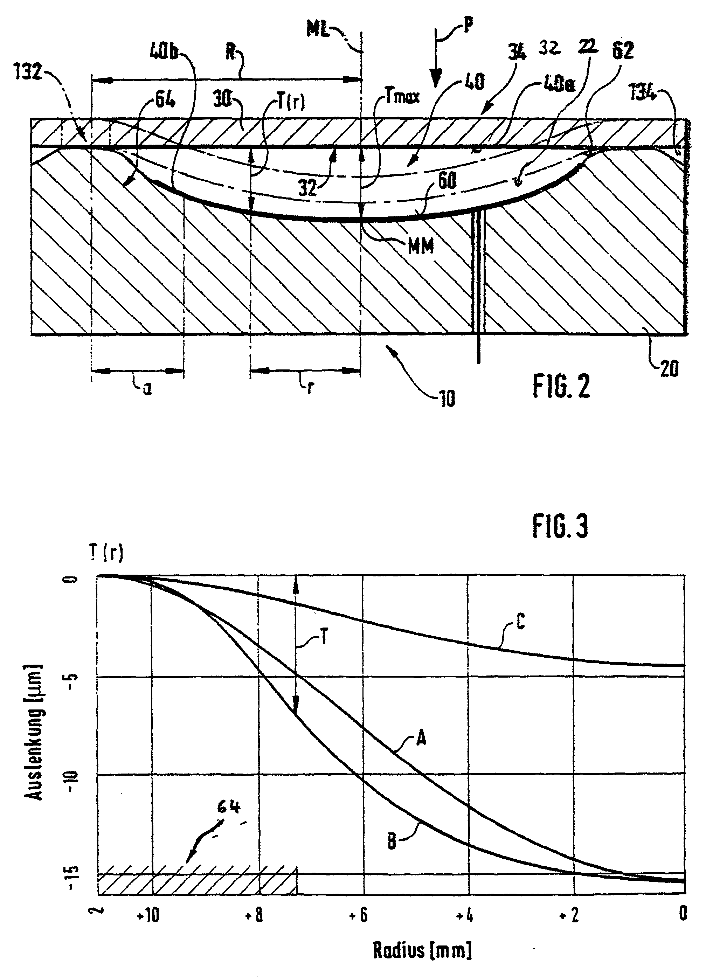

Fig. 2 zeigt eine zur Verdeutlichung nicht maßstabsgerechte Schnittdarstellung des kapazitiven Drucksensors 10. Das Membranbett 22 besteht aus einer konkaven Zentralfläche 60, an die sich eine konvexe Randfläche 62 anschließt, die durch eine Randlinie 132 begrenzt wird. Die Form des Membranbetts 22 ist weiter unten noch genauer beschrieben.

Das Membranbett 22 ist rotationssymmetrisch zu einer Mittellinie ML, die das Membranbett 22 im Membranbettmittelpunkt MM durchstößt. Der Abstand Randlinie 132 Mittellinie ML gibt den Radius R des Membranbetts 22 an. Das Membranbett 22 weist eine Randzone 64 (in Fig. 3 gestrichelt dargestellt) mit einer Breite a auf, die sich von der Randlinie 132 her gesehen, etwa über ein Drittel des Membranbettradius R erstreckt. Es gilt also a/R ≈ 1/3. Die Schnittlinie des Membranbetts 22 verläuft von der Randlinie 132 des Membranbetts 22 her gesehen erst konvex und dann konkav gekrümmt. Der Wechsel zwischen konvexer und konkaver Krümmung erfolgt innerhalb der Randzone 64.

Im Punkt MM besitzt das Membranbetts 22 die maximale Tiefe $T_{max}$, die bei dem dargestellten Ausführungsbeispiel 15 μm beträgt. Allgemein wird die Tiefe $T(r)$ des Membranbetts 22 relativ zur Außenkonturfläche des Grundkörpers 20 gemessen wird. Im dargestellten Fall fällt die Außenkonturfläche im wesentlichen mit der Unterseite 32 der Membran 30 zusammen.

Der Prozeßdruck P wirkt in Pfeilrichtung auf die Oberseite 34 der Membran 30 und lenkt die Membran 30 aufgrund der geringen Dicke d der Membran 30 elastisch aus (gestrichelt dargestellt).

Auf der Unterseite 32 der Membran 30 ist eine erste Elektrode 40a aufgebracht. Eine zweite Elektrode 40b ist auf das Membranbett 22 aufgebracht. Das Aufbringen kann z.B. durch Sputtern, Aufdampfen oder in Siebdrucktechnik erfolgen. Die zweite Elektrode 40b überdeckt im wesentlichen die konkave Zentralfläche 60. Sie muß diese aber nicht notwendigerweise vollständig überdecken. Die beiden sich gegenüberliegenden Elektroden 40a, 40b bilden einen Meßkondensator, dessen Kapazität vom herrschenden Prozeßdruck P abhängt. Die Schichtdicken der Elektroden 40a bzw. 40b sind zur Verdeutlichung übertrieben stark dargestellt. Die Elektroden 40a, 40b sind über nicht näher dargestellte Anschlußleitungen mit einer ebenfalls nicht dargestellten Auswerteelektronik verbunden.

Die Auswerteelektronik für das Meßsignals des Meßkondensators ist Stand der Technik. Die Auswerteelektronik, die nicht Gegenstand dieser Erfindung ist, ist deshalb nicht beschrieben.

In Fig. 3 ist der funktionale Verlauf einer bestimmten mathematisch berechneten Membranbettschnittlinie (Funktionsverlauf B) für das Membranbett 22 näher dargestellt. Aufgetragen ist die Tiefe T des Membranbetts 22 als Funktion des Abstandes r von der Mittellinie ML.

Da das Membranbett 22 rotationssymmetrisch zur Mittellinie ML ist, ist nur der Verlauf der Schnittlinie bis zur Membranbettmitte, d.h. bis r= 0 mm, dargestellt. Bei diesem speziellen Ausführungsbeispiel beträgt die maximale Tiefe $T_{max}$= 15 μm und der Radius des Membranbetts 22 ist R=11 mm, mit T(11mm) = 0. Die gestrichelt dargestellt Randzone 64 erstreckt sich über den Bereich r=11 mm bis r=7,33 mm Die Schnittlinie B berechnet sich nach folgender Formel

$$T(r) \sim \left(R^{\alpha} - r^{\alpha}\right)^{\beta} * \frac{\left(\cos\left(0.5 * \pi * \frac{r}{R}\right)\right)^{\gamma}}{\left(r^{\varepsilon} + R^{\varepsilon}\right)^{\varphi}}$$

mit den Parametern α= 4, β= 1.1, γ= 0.6, ε= 8, φ= 4.

Wie aus der Fig. 3 ersichtlich, verläuft die Schnittlinie B des Membranbetts 22 von der Randlinie 132 (r = 11 mm) her gesehen erst konvex und dann konkav gekrümmt. Der Wechsel zwischen konvexer und konkaver Krümmung erfolgt innerhalb der Randzone 64, die sich über ein Drittel des Membranbettradius R erstreckt.

Eine ähnliche Membranbettform erhält man, wenn die Parameter in den Parameterbereichen 0< α < 100 und α gerade, 0< β <10, -5 < γ < 10, 0< ε < 100, -20< φ <20 liegen.

Der Funktionsverlauf A gibt ein aus dem Stand der Technik bekanntes Membranbett in Form einer Membranbiegelinie entsprechend der Formel

$$T(r,p) \sim p(R^2 - r^2)^2$$

mit R=11 mm und Tmax=15 μm wieder. Die beiden Schnittlinien A und B weisen deshalb dieselbe maximale Tiefe $T_{max}$ auf. Im Bereich der konkaven Randfläche 62 verläuft die Schnittline B teilweise oberhalb und im Bereich der konvexen Randfläche 60 vollständig unterhalb der Membranbiegelinie A.

Der Funktionsverlauf C gibt die berechnete Schnittlinie der Membran 30 bei einem Nenndruck von ca. p=10 bar wieder.

Nachfolgend ist die Funktion des erfindungsgemäßen Drucksensor 10 näher erläutert.

Wirkt auf die Membran 30 ein Prozeßdruck p in Pfeilrichtung, so verformt sich die Membran 30 entsprechend. Nimmt der Prozeßdruck P weiter zu, so nähert sich die Membran 30 immer mehr dem Membranbett 22, bis sie beim Prozeßgrenzdruck Pg den Membranbettmittelpunkt MM an der tiefsten Stelle des Membranbetts berührt. Zur vollständigen flächigen Anlage zwischen Membran 30 und Membranbett 22 kommt es erst bei einem erheblich höheren Prozeßdruck Pü. Ab diesem Prozeßdruck Pü liegt die maximale Spannungsbelastung der Membran 22 vor. Eine weitere Druckerhöhung führt zu keiner größeren Spannungsbelastung, da die maximale Verbiegung der Membran erreicht ist. Im Druckbereich zwischen Pg und Pü liegt die Membran 30 nur teilweise flächig an der konkaven Zentralfläche 60 des Membranbetts 22 an.

Aufgrund der nur teilweisen flächigen Anlage wirken nur geringe Adhäsionskräfte. Die Membran 30 löst sich deshalb leicht vom Membranbett 22 und folgt unmittelbar dem Prozeßdruck P, wenn dieser wieder in den normalen Meßbereich des Drucksensors 10 zurückkehrt. Dies gilt im wesentlichen für den gesamten Druckbereich vom Prozeßgrenzdruck Pg bis zum Überdruck Pü.

Ab einem gewissen Überdruck Pü liegt die Membran 30 natürlich vollständig am Membranbett 22 an. Aber auch in diesem Fall wird das Ablösen der Membran 30 vom Membranbett 22 erleichtert, da aufgrund der speziellen Membranbettform eine etwas höhere Membranspannung wirkt.

Durch das leichtere Ablösen wird die Prozeßsicherheit erheblich erhöht. Der vom Drucksensor gelieferte Meßwert entspricht genau dem herrschenden Prozeßdruck.

Weiterhin bringt die erfindungsgemäße Form des Membranbetts herstellungsbedingte Vorteile. Das Membranbett 22 muß, wie bereits erwähnt, aus dem vollen Grundkörper 20 herausgeschliffen werden. Je größer der Abstand Membranbett 22 und Unterseite 32 bei Nenndruck ist, desto größer können die Fertigungstoleranzen sein. Dieser Abstand wird im wesentlichen durch die Tiefe des Membranbetts 22 im Zentralbereich 60 des Membranbetts 22 beeinflußt. Der erfindungsgemäße Drucksensor 10 weist ein Membranbett 22 auf, das eine relativ breite Zentralfläche 60 besitzt. Der Abstand Membranbett 22 und Unterseite 32 über einen weiten Bereich auch bei einer Druckbelastung der Membran 30 relativ groß ist.

Aufgrund dieses großen Abstandes Membranbett 22 und Unterseite 32 ist auch der Elektrodenabstand der Elektroden 40a, 40b relativ groß, was die Gefahr eines elektrischen Kurzschlusses zwischen den beiden Elektroden 40a, 40b erheblich verringert.

Nach einer bevorzugten Ausgestaltung gemäß Anspruch 2 verläuft die Membranbettschnittlinie im Bereich der konvexen Randfläche 62 teilweise oberhalb und im Bereich der konkaven Zentralfläche 60 vollständig unterhalb der Membranbiegelinie. Diese Membranbettform hat den zusätzlichen Vorteil, daß die Membranspannungen nahe der Randlinie 132 relativ klein bleiben.

Nach einer weiteren bevorzugten Ausgestaltung der Erfindung gemäß Anspruch 3 ist die Membranbettform durch Parameterbereiche definiert. Diese Parameterbereiche liefern jeweils eine Membranbettform, die im wesentlichen der in Fig. 3 dargestellten Membranbettschnittlinie (Funktionsverlauf B) entspricht. Je nach Parameterwahl erhält man entweder eine breitere konkave Zentralfläche 60, die hohe Fertigungstoleranzen erlaubt, aber eine geringfügig erhöhte Spannungsbelastung der Membran 22 in der Randzone 64 zur Folge hat oder eine schmalere Zentralfläche 60, mit einer geringeren Spannungsbelastung für die Membran 22. Das leichtere Ablösen der Membran 22 nach einem Überlastfall ist in jedem Fall gegeben.

Nach einer weiteren bevorzugten Ausgestaltung der Erfindung nach Anspruch 4 ist die Membranbettform durch spezielle Parameter definiert. Diese Parameter stellen einen optimalen Kompromiß zwischen einer breiten konkaven Zentralfläche 60 und einer möglichst geringen Spannungsbelastung der Membran 22 dar.

Nach einer weiteren bevorzugten Ausgestaltung der Erfindung, weist der Grundkörper 20 am äußeren Randbereich der Auflagefläche 130 eine Ausnehmung 134 auf, die zur Aufnahme des Aktivhartlots dient, das die feste Verbindung zwischen Membran 30 und Grundkörper 20 bewirkt. Dadurch ist gewährleistet, daß die Membran 30 exakt bündig auf der Auflagefläche 130 aufliegt.

Mit Hilfe des erfindungsgemäßen Drucksensors 10 wird das Ablösen der Membran 30 vom Membranbett 22 über einen großen Druckbereich erleichtert, ohne daß die Spannungsbelastung der Membran 30 im Überlastfall wesentlich zunimmt. Gleichzeitig wird die Herstellung des Membranbetts 22 aufgrund höherer Fertigungstoleranzen erleichtert.

**EP 1 077 368 B1**

**Patentansprüche**

1. Kapazitiver keramischer Drucksensor, bestehend aus einem keramischen Grundkörper (20) mit einem kreisförmigen Membranbett (22),

   - einer mit dem Grundkörper (20) verbundenen keramischen Membran (30), die das Membranbett (22) überdeckt,
   - einem Meßkondensator zur Erzeugung eines Meßsignals mit einer ersten und zweiten Elektrode (40a, 40b), die jeweils einander gegenüberliegend an dem Membranbett (22) bzw. an der Unterseite (32) der Membran (30) aufgebracht sind,

   wobei das Membranbett (22) aus einer konkaven Zentralfläche (60), an die sich eine konvexe Randfläche (62) anschließt, besteht und die Schnittlinie des Membranbetts im Bereich der konvexen Randfläche (62) stärker als im Bereich der konkaven Zentralfläche (60) gekrümmt ist und der Wechsel zwischen konkaver und konvexer Krümmung der Schnittlinie innerhalb einer Randzone (64), die sich über ein Drittel des Membranbettradius (R) erstreckt, erfolgt, wobei der Membranbettradius (R) der Abstand zwischen der das Membranbett (22) begrenzenden Randlinie (132) und der Mittellinie (ML) des Membranbetts (22) ist.

2. Kapazitive keramischer Drucksensor nach Anspruch 1, wobei die Schnittlinie im Bereich der konvexen Randfläche (62) teilweise oberhalb und im Bereich der konkaven Zentralfläche (60) vollständig unterhalb einer Membranbiegelinie mit gleicher maximalen Tiefe $T_{max}$ verläuft, die folgende mathematische Form besitzt:

$$T(r,p) \sim p(R^2 - r^2)^2,$$

   wobei T die Tiefe, r den Abstand zur Mittellinie, R den Membranbettradius und p den Druck darstellen.

3. Kapazitive keramischer Drucksensor nach Anspruch 1, wobei die Schnittlinie folgende mathematische Form besitzt:

$$T(r) \sim \left(R^\alpha - r^\alpha\right)^\beta * \frac{\left(\cos\left(0.5 * \pi * \frac{r}{R}\right)\right)^\gamma}{\left(r^\varepsilon + R^\varepsilon\right)^\varphi}$$

   mit den Parameterbereichen
   $0< \alpha < 100$ und $\alpha$ gerade, $0< \beta <10$, $-5< \gamma < 10$, $0< \varepsilon < 100$, $-20< \varphi <20$

4. Kapazitive keramischer Drucksensor nach Anspruch 3,
   wobei die Parameter folgende Werte aufweisen: $\alpha= 4$, $\beta= 1.1$, $\gamma= 0.6$, $s= 8$, $\varphi= 4$

5. Kapazitive keramischer Drucksensor nach einem der vorhergehenden Ansprüche, wobei der Grundkörper (20) am äußeren Randbereich der Auflagefläche (130) eine Ausnehmung (134) zur Aufnahme von Aktivhartlot aufweist.

**Claims**

1. A capacitive ceramic pressure sensor, comprising a ceramic base body (20) with a circular diaphragm bed (22),

   - a ceramic diaphragm (30) which is connected to the base body (20) and which covers the diaphragm bed (22),

   - a precision capacitor for producing a measurement signal with a first and a second electrode (40a, 40b) which are each attached, mutually opposed, to the diaphragm bed (22) and to the underside (32) of the diaphragm (30) respectively, wherein the diaphragm bed (22) comprises a concave central face (60) which is adjoined by a convex edge face (62), and the intersection line of the diaphragm bed is curved to a greater degree in

6

the region of the convex edge face (62) than in the region of the concave central face (60), and the transition between the concave and the convex curvature of the intersection line occurs inside an edge zone (64) extending over a third of the radius (**R**) of the diaphragm bed, wherein the radius (**R**) of the diaphragm bed is the distance between the edge line (132) - bounding the diaphragm bed (22) - and the median line (**ML**) of the diaphragm bed (22).

2. A capacitive ceramic pressure sensor according to Claim 1, wherein the intersection line in the region of the convex edge face (62) extends partly above and in the region of the concave central face (60) completely below a diaphragm bending line with the same maximum depth **T<sub>max</sub>** which has the following mathematical form:

$$T(r, p) \sim p(R^2 - r^2)^2$$

in which **T** represents the depth, r the distance from the median line, **R** the radius of the diaphragm bed and **p** the pressure.

3. A capacitive ceramic pressure sensor according to Claim 1, wherein the intersection line has the following mathematical form:

$$T(r) \ \sim \ \left(R^\alpha - r^\alpha\right)^\beta \ * \ \frac{\left(\cos\left(0.5 * \pi * \frac{r}{R}\right)\right)^\gamma}{\left(r^\varepsilon + R^\varepsilon\right)^\varphi}$$

with the parameter ranges
$0 < \alpha < 100$ and $\alpha$ even, $0 < \beta < 10$, $-5 < \gamma < 10$, $0 < \varepsilon < 100$, $-20 < \varphi < 20$.

4. A capacitive ceramic pressure sensor according to Claim 3, wherein the parameters have the following values: $\alpha = 4$, $\beta = 1{\cdot}1$, $\gamma = 0{\cdot}6$, $\varepsilon = 8$, $\varphi = 4$.

5. A capacitive ceramic pressure sensor according to one of the preceding Claims, wherein the base body (20) has a recess (134) on the outer edge region of the abutment face (130) for receiving active brazing solder.

**Revendications**

1. Capteur de pression capacitif en céramique se composant d'un corps de base en céramique (20) avec un plateau de membrane de forme circulaire (22), une membrane en céramique (30) reliée avec le corps de base (20), qui recouvre le plateau de membrane (22) et un condensateur de mesure pour la génération d'un signal de mesure avec une première et une deuxième électrode (40a, 40b), qui sont respectivement disposées sur le plateau de membrane (22) ou sur le côté inférieur (32) de la membrane (30) en étant opposées l'une à l'autre, le plateau de membrane (22) se composant d'une surface centrale concave (60), à laquelle se joint une surface marginale convexe (62), la ligne de coupe du plateau de membrane étant plus fortement courbée dans la zone de la surface marginale convexe (62) que dans la zone de la surface centrale concave (60) et le changement entre la courbure concave et la courbure convexe de la ligne de coupe ayant lieu à l'intérieur d'une zone marginale (64), qui s'étend sur un tiers du rayon du plateau de membrane (R), le rayon du plateau de membrane (R) étant l'espacement entre la ligne marginale (132) délimitant le plateau de membrane (22) et la ligne médiane (ML) du plateau de membrane (22).

2. Capteur de pression capacitif en céramique selon la revendication 1, **caractérisé en ce que**, dans la zone de la surface marginale convexe (62), la ligne de coupe s'étend partiellement au-dessus, et dans la zone de la surface centrale concave (60), entièrement en dessous d'une ligne de courbure de membrane avec une profondeur maximale égale T<sub>max</sub>, dont la forme mathématique est la suivante :

$$T(r,p) \sim p(R^2 - r^2)^2$$

T étant la profondeur, r l'espacement par rapport à la ligne médiane, R le rayon du plateau de membrane et p la pression.

**3.** Capteur de pression capacitif en céramique selon la revendication 1, **caractérisé en ce que** la forme mathématique de la ligne de coupe est la suivante :

$$T(r) \sim \left(R^\alpha - r^\alpha\right)^\beta * \frac{\left(\cos\left(0.5 * \pi * \frac{r}{R}\right)\right)^\gamma}{\left(r^\varepsilon + R^\varepsilon\right)^\varphi}$$

avec les zones de paramètres suivantes :

$0 < \alpha < 100$ et $\alpha <$ entier,$> 0 < \beta < 10$, $-5 < \gamma < 10$, $0 < \varepsilon < 100$, $-20 < \varphi < 20$.

**4.** Capteur de pression capacitif en céramique selon la revendication 3, **caractérisé en ce que** les paramètres ont les valeurs suivantes : $\alpha = 4$, $\beta = 1.1$, $\gamma = 0.6$, $\varepsilon = 8$, $\varphi = 4$.

**5.** Capteur de pression capacitif en céramique selon l'une des revendications précédentes, **caractérisé en ce que** le corps de base (20) comprend dans la zone marginale extérieure de la surface d'appui (130) un évidement (134) pour recevoir de la brasure active.

FIG.1

FIG. 2

FIG. 3